# EUROPEAN PATENT APPLICATION

(11) **EP 0 765 084 A2**
(43) Date of publication of application: **26.03.1997**
(21) Application number: 96306569.3
(22) Date of filing: 10.09.1996
(51) Int. Cl.: H04N 7/15

(54) **Automatic video tracking system**

(30) Priority: 21.09.1995 US 531821
(71) Applicant: AT&T Corp., New York, NY 10013-2412 (US)
(72) Inventor: Ansari, Ahmad C., Monmouth, New Jersey 07724 (US); Whalen, Matthew Stephen, Rumson, New Jersey 07760 (US)
(74) Representative: Buckley, Christopher Simon Thirsk

(57) **Abstract**

A system for automatic audio/video tracking includes a plurality of video input devices (10-16), each video input device providing a different view of a defined area. A plurality of audio pickup devices (18-26) are provided for picking up audio in the defined area. A controller (30) receives audio information from the plurality of audio pickup devices, determines relative location of a talker within the defined area based on the received audio information, and selects one of the plurality of video input devices having the view corresponding to the defined area having the talker.

## Description

### BACKGROUND OF THE INVENTION

### 1. Field of the Invention

The present invention relates to tracking systems and, more particularly, to automatic video tracking systems.

### 2. Description of the Related Art

Visual communication over point-to-point telecommunication networks has become an increasingly useful and economic alternative for information exchange in business and consumer applications. A common element of all visual communication systems such as video conferencing systems, typically include one or more video input devices. The video input devices typically used have generally been based on variations of traditional video camcorder technology.

During videoconferencing, there often occurs a need to switch camera views quickly from one room view to another. For example, during a multimedia conference in which a plurality of potential speakers are seated in a conference room, it may be desirable to switch camera views depending on which speaker is presently talking, to always maintain a view of the current speaker. If one camera having a remote pan/tilt stage is provided, an operator typically positions the camera using the remote pan/tilt stage to capture a view of the active speaker. However, such technique requires the operator to determine which participant is the active speaker and to position the camera accordingly. This technique can be difficult and time consuming. A plurality of complete camera units can minimize this problem, although this still requires an operator to determine which participant is the active speaker and to react accordingly so that the correct camera unit can be activated and positioned.

The present invention is provided to overcome the above-noted disadvantages.

### SUMMARY OF THE INVENTION

A system for automatic audio/video tracking, includes a plurality of video input devices, each video input device providing a different view of a defined area. A plurality of audio pickup devices for picking up audio in the defined area are provided. A controller receives audio information from the plurality of audio pickup devices and determines relative location of a talker within the defined area based on the received audio information. The controller selects one of the plurality of video input devices having a view corresponding to the defined area having the talker. In addition to being useful for videoconferencing systems, embodiments of the present invention are adaptable for use in various other types of applications including security systems and various other types of monitoring systems, for example.

### BRIEF DESCRIPTION OF THE DRAWINGS

So that one skilled in the art to which the subject invention appertains will better understand how to practice the present invention, preferred embodiments of the invention will be described in detail below with reference to the accompanying drawings, in which:
FIG. 1 illustrates an arrangement according to an embodiment of the present invention, including multiple cameras and audio pickups;
FIG. 2 is a block diagram of circuitry for controlling the arrangement depicted in Fig. 1, according to an embodiment of the present invention;
FIGs. 3 and 4 illustrate various multiple camera and audio pickup arrangements according to other embodiments of the present invention;
FIGs. 5 and 6 are block diagrams of a multi-sensor digital camera arrangement;
FIGs. 7A and 7B depict different views of a linear multi-sensor and audio pickup arrangement according to an embodiment of the present invention;
FIG. 7C depicts a block diagram of the control circuitry for driving and controlling the arrangement depicted in Figs. 7A and 7B.

### DETAILED DESCRIPTION OF THE PREFERRED EMBODIMENTS

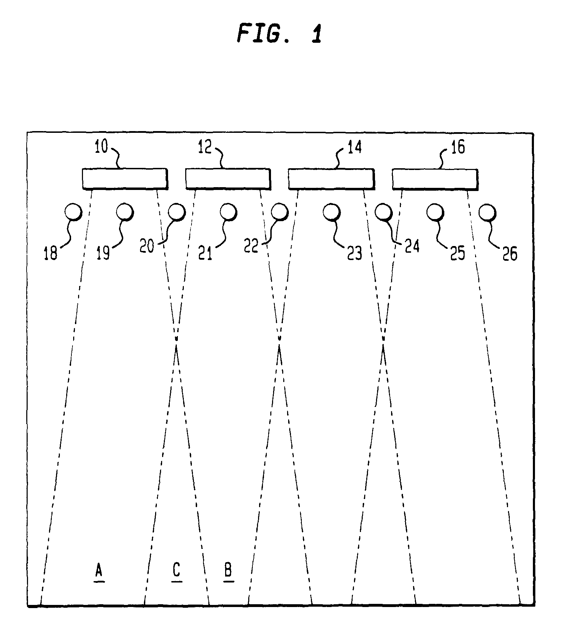

Referring to the drawings in which like reference numerals identify similar or identical elements, Fig. 1 depicts a system including a plurality of discrete video camera units 10, 12, 14 and 16 and an audio tracking system including audio pickups 18-26. The video cameras can each consist of any suitable digital or analog camera having a video output port, for example. The audio tracking system utilizes the techniques disclosed, for example, in an article by Flanagan et al. entitled "Computer-Steered Microphone Arrays For Sound Transduction in Large Rooms", Journal of the Acoustical Society of America, Vol. 78, No. 5, Nov. 1985, pp. 1508-1518, which describes a design for a microphone system that automatically locates and steers to an active dominant talker in a room. However, instead of automatically steering a microphone system to pick up an active dominant talker in a room as described in that article, the present invention automatically selects an appropriate video camera or video sensor for viewing the active dominant talker in the room.

Audio pickup devices 18-26 can consist of autodirective microphones. Such autodirective microphones are beam-forming, signal seeking devices that, when arranged in a proper array, allow highly reliable speech/non-speech decisions as well as automatic tracking of speech sources as the speech sources shift positions in a noisy environment. An example of a microphone array suitable for use in the present invention, consists of a plurality of small electret microphones such as Western Electric's Model EL2, having frequency responses matched within ±1.0dB over the frequency range of 800-2000 Hz.

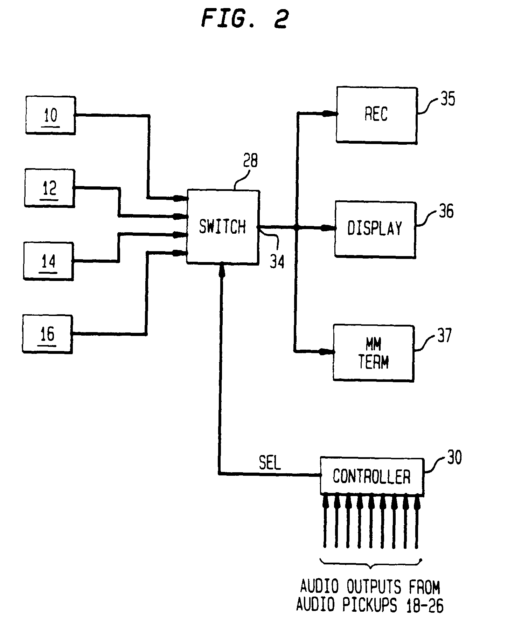

As shown in Fig. 1, the plurality of discrete video camera units 10, 12, 14 and 16 and the plurality of audio pickups 18-26 can be arranged in an array along the front portion of a conference room, for example. The audio outputs of each of microphones 18-26 are electrically connected to controller circuitry and the video outputs of each of cameras 10, 12, 14 and 16 are electrically connected to a switch, as will be described in more detail by reference to Fig. 2.

As shown in Fig. 2, the audio outputs of audio pickups 18-26 are input to controller 30. Controller 30 uses the audio outputs from each of the audio pickups to continuously determine the position of the active dominant talker in the room, as described in the above-referenced article by Flanagan et al. Controller 30 generates and provides appropriate selection signals (SEL) to switch 28. The selection signals indicate which portion of the room has the active dominant speaker. Switch 28, in response to the selection signals, acts as a multiplexer for steering the appropriate video output signal from camera 10, 12, 14 or 16, to output port 34 of switch 28. The video signal output from output port 34 can then be provided to a video recorder 35, a video display 36, or to a remote multimedia terminal 37, for example, or any combination of these and any other suitable devices.

An example of the operation of the system depicted in Figs. 1 and 2 will now be described. If controller 30 determines, using the audio outputs from audio pickups 18-26, that the dominant active speaker is at position A, for example, the proper selection signals SEL will be generated by controller 30 and provided to switch 28. Switch 28 is controlled by the selection signals to steer the video output of camera 10 to video recorder 35, video display 36 and/or to multimedia terminal 37. If the same dominant active talker should then move to position B, or if a more dominant active talker should begin talking at position B, controller 30 will detect it and, by generating the appropriate selection signals, select camera 12 accordingly. If the dominant active talker should be in an overlapping portion of the fields of view (e.g., at position C), a logical determination can be made by controller 30 to select the view from camera 10 or the view from camera 12. For example, controller 30 could be programmed to assume that only one talker is in the room and to keep track of the direction of movement of the active talker and to select camera 12, for example, if it is determined that the active talker is moving to the right from position A towards position B. As soon as the active talker enters the overlapping field of view area, the view could be switched from camera 10 to camera 12. On the other hand, controller 30 could be programmed to maintain the view from camera 10 for as long as possible, until the active talker leaves the field of view of camera 10. As soon as the active dominant talker leaves the field of view of camera 10, the output from camera 12 could be selected.

Accordingly, the present invention provides a fast and efficient system for automatically selecting an appropriate camera view of a room, for example.

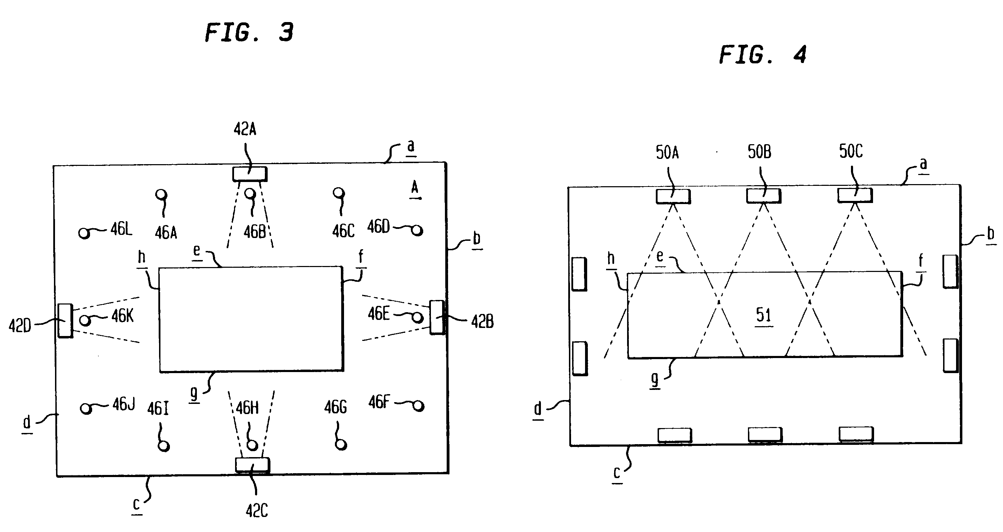

As shown in Fig. 3, the video cameras and audio pickups could be arranged around the periphery of a conference room for providing frontal views of each speaker seated around a conference table, for example. As shown in Fig. 3, cameras 42A-42D can be arranged around the periphery of conference room A (i.e., a room bounded by walls a-d) in which a table 44 is provided. According to this embodiment of the present invention, twelve audio pickups 46A-46L are arranged around the periphery of the room, three per wall. However, it should be clear that the number of audio pickups required for determining the actual location of the dominant active talker in the room is based on several factors, including room shape and size, beam width of the highly directive audio pickups 46A-46L, etc. For example, it may be necessary to provide more audio pickups along walls a and c than along walls b and d, since walls a and c may be longer than walls b and d, as shown. When an active dominant talker is on side e of table 44, the location of the talker can be detected and camera 42C can be automatically selected. If the active dominant talker is on side f of table 44, camera 42D will automatically be selected. When the active dominant talker is on side g of table 44, camera 42A will automatically be selected. Finally, if the active dominant talker is on side h of table 44, camera 42B will automatically be selected.

Providing one camera along each wall may require wide-angle lenses, depending on the size of the area to be viewed. Such wide angle lenses often provide a distorted image of the room. Accordingly, as shown in Fig. 4, it may be desirable to provide more than one camera unit, each having a relatively narrower field of view, along each of the walls. As shown in Fig. 4, cameras 50A - 50C are arranged along wall a. The fields of view of each of cameras 50A-50C, as shown by dashed lines, overlap and cover the width of side g of the table 51. Similar camera placements can be provided along wall c, as shown. Of course, two or more cameras having similar overlapping fields of view can be provided along walls b and d also. By providing a plurality of cameras, each having a relatively narrow field of view, a more natural image can be provided from each camera. The audio pickups can be arranged around the periphery of the room in suitable fashion, depending on the size and geometry of the room. It should be clear that the present invention is suitable for use with any room geometry and can be used in any size room by providing a suitable number of video and audio pickups.

Providing a plurality of complete camera units along the periphery of a room may be inefficient and costly. Accordingly, in order to reduce the overall cost of implementing the present invention, a digital video camera having a plurality of image sensing portions can be provided. A digital camera including a plurality of lenses and image sensors and common processing circuitry for processing the video information from a selected one of the plurality of image sensors has been developed and is described in commonly owned U.S. Patent Application being filed concurrently herewith, entitled Video Camera Including Multiple Image Sensors by inventors Ansari et al., and which is incorporated herein by reference in its entirety. The digital camera includes at least a first lens for focusing a first image, and a second lens for focusing a second image. At least a first sensor is provided for converting a light intensity and color pattern of the first image into a first electrical signal and a second sensor is provided for converting a light intensity and color pattern of the second image into a second electrical signal. A processing unit processes the first and second electrical signals and a switch selectively couples either the first electrical signal or the second electrical signal to the processing unit. An operator controls from which video sensor data is actively being received, by use of a keyboard or keypad provided on a controller or videophone, for example. The disclosed digital camera thus allows images received through a plurality of lenses to be processed by the same processing circuitry. Accordingly, the overall cost of implementing the tracking system of the present invention can be minimized by use of the digital camera as disclosed in the above-referenced copending application. For example, a plurality of video sensor units and lenses and audio pickups can be arranged around the periphery of a conference room and the video outputs fed to a common video processing unit. As in the previous embodiments, the audio pickup outputs are fed to a microprocessor controller for determining relative location of an active dominant talker in the room. The controller circuitry then automatically controls which video sensor unit is selected for viewing.

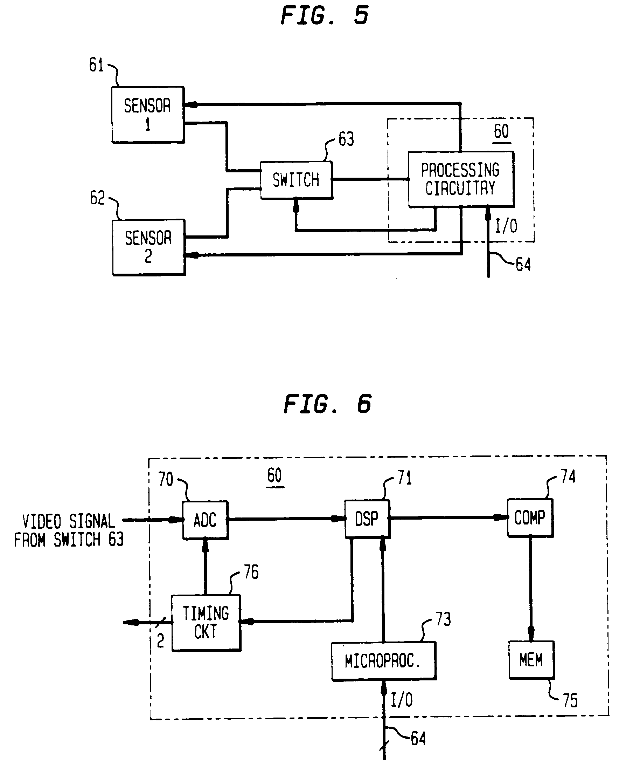

Fig. 5 depicts in greater detail a digital video camera including a plurality of sensor portions as described in the above-referenced copending patent application. As shown, processing circuitry 60 and two individual image sensor portions 61 and 62 are provided. A switch 63 is provided for selectively switching the raw CCD video signal output from image sensor portion 61 or 62 to the input of processing circuitry 60. Switch 63 can be any switch suitable for switching video signals and can consist of a mechanical switch or a solid state switch, for example, although to reduce switching time and overall cost, a solid state switch is preferred. As described in the above-referenced copending application, an operator inputs commands to processing circuitry 60 by use of a keyboard, keypad, or other suitable input device, through I/O ports 64. Processing circuitry 60 generates appropriate control signals that control switch 63 accordingly, for selecting which sensor output (e.g., from sensor 1 or sensor 2) is to be directed to processing circuitry 60. The arrangement depicted in Fig. 5 allows a user to select from which lens an image is to be recorded or viewed. By using common drive and processing electronics for the two sensor portions 61 and 62, camera functionality can be increased, while keeping component costs low.

As shown in more detail in Fig. 6, processing circuitry 60 receives the selected video signal from switch 63. Analog to digital converter (ADC) 70 converts the video signal to digital data which is then input to digital signal processor (DSP) 71. DSP 71 processes the digital data and outputs the processed data to compression circuit 74 where it can be compressed and stored in memory 75, for example. In the alternative, the video can be processed and output along with audio, by a remote multimedia terminal, for example. Timing circuitry 76 generates the necessary timing signals for driving sensors 61 and 62. Microcontroller 73 controls DSP 71 as well as timing circuitry 76.

According to an embodiment of the present invention, sensor portions 61 and 62 can include audio pickups, and/or separate audio pickups can be arranged around a room for providing audio signals to microprocessor 73. Microprocessor 73 can use the information from the audio pickups, instead of a control signal received from an operator via a keyboard, joystick, etc., to determine which portion of a room has the active dominant talker and to generate appropriate selection signals that are provided to switch 63 for selecting the appropriate video sensor. The outputs of the sound pickup devices can be provided to microcontroller 73 via a plurality of I/O ports 64, for example.

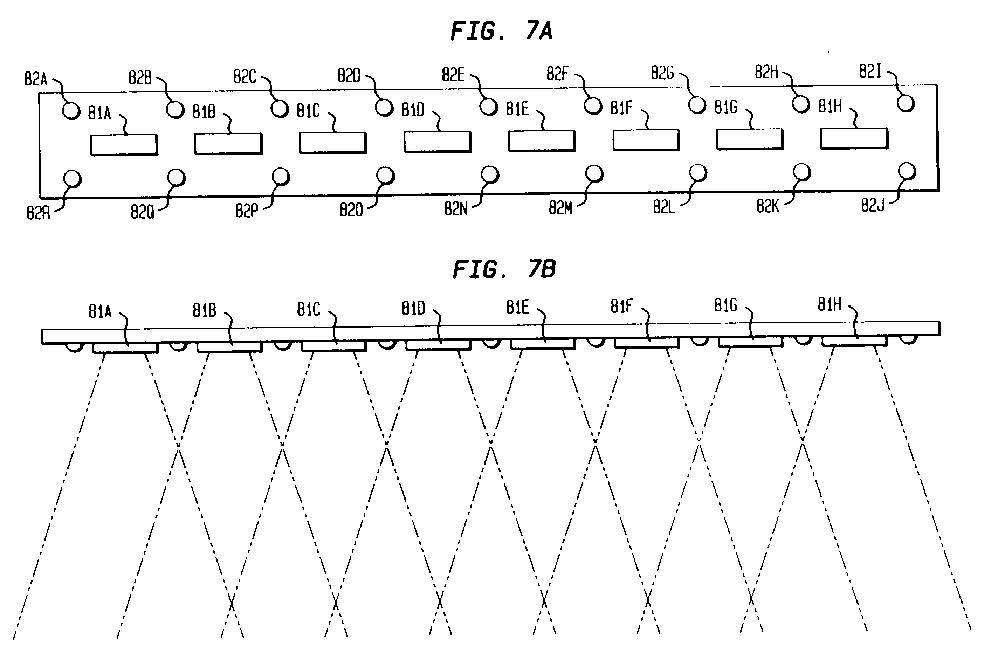

An example of a linear pickup arrangement suitable for implementing the present invention is shown in Fig. 7A. Fig. 7A depicts a front view of a linear microphone/CCD array consisting of audio pickup elements 82A-82R and CCD image elements 81A-81H. As depicted in the top view of the array as shown in Fig. 7B, the image sensing elements 81A-81H are arranged, such that the field-of-view of each CCD element overlaps the field-of-view of the nearest neighbor CCDs. For example, as depicted in Fig. 7B, the field-of-view of CCD element 81A overlaps with the field-of-view of CCD element 81B. The field-of-view of CCD element 81B, in turn, also overlaps with the field-of-view of CCD element 81C, etc. Of course, the distance between the CCD elements and the placement and number of pickup elements are dependent on the size of the area to be monitored.

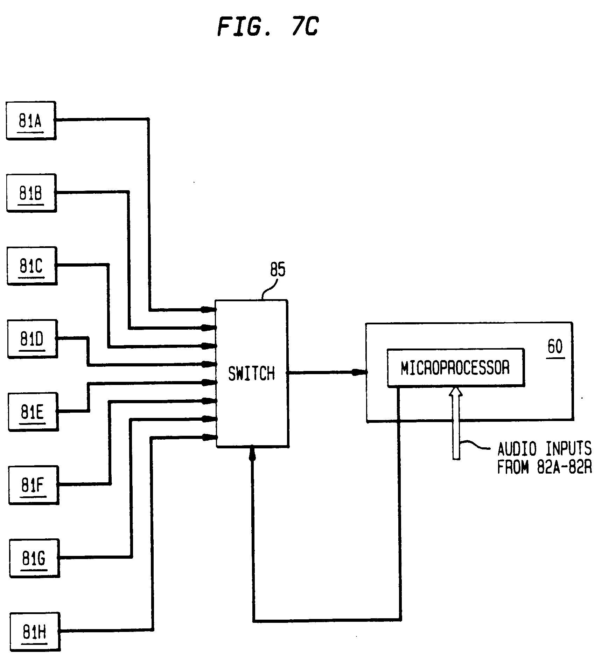

As depicted in block diagram form in Fig. 7C, the outputs of CCDs 81A-81H are supplied to switch 85. The audio from pickup elements 82A-82R can be supplied to the microprocessor provided in processing circuitry 60 or to a separate microprocessor, for determining the location of the active dominant talker within a room. When the location of the active dominant talker is determined by the microprocessor, the microprocessor generates control signals that control switch 85 so that the output of the corresponding one of the CCD image sensing elements 81A-81H is selectively switched to the input of the processing circuitry 60.

Of course, the image sensors and audio pickups can be arranged in any suitable fashion. For example, the image sensors and audio pickups can be provided around the periphery of a conference room similar to that shown in Figs. 3 and 4. In the alternative, the image sensors and audio pickups can be arranged on a stand in a center of a conference room table, with one or more image sensors and audio pickups facing each side of the table. With this arrangement, automatic video tracking of all sides of the table can be provided.

By use of known digital video signal processing techniques, it is possible to achieve various types of video effects, thus enhancing the versatility of the present invention. For example, it is possible to simultaneously process signals from one or more adjacent CCD units to achieve a "seamless" video picture. That is, as depicted in Fig. 7B, the overlapping portions of the images from sensors 81A and 81B, for example, can be digitally combined in any desired manner. Accordingly, if an active dominant talker is moving from position A to position B to position C, for example, the video image would appear as one camera panning the scene. Such electronic panning can be performed more quickly and accurately than by panning performed by a video camera mounted to a mechanical pan/tilt stage.

In addition, by using high resolution CCD image sensors, zoom features can be provided also utilizing known video signal processing techniques. For example a portion of an image from CCD image sensing elements forming a high resolution CCD image sensor can be digitally processed and, in effect, enlarged to achieve a zoom feature. This effect would be useful, for example, in a security surveillance system or a video conferencing system.

Accordingly, by appropriate placement of the audio sensing elements, the-processor can determine from precisely what portion of a scene (e.g., a room) a sound is occurring, and process the video from one or more vide sensors accordingly to achieve electronic pan/tilt and zoom effects, to view the desired portion of the scene.

In addition to the use of audio sensing elements, various applications of the present invention also contemplate the use of thermal sensors, pressure sensors, motion sensors, etc., for automatically selecting an appropriate view. For example, pressure sensors could be provided within the seats of chairs. The signals provided by the pressure sensors could then be used to select an appropriate view. In another application, thermal and/or smoke sensors and image sensors could be arranged throughout a building, for example, and if a fire is detected, a view could be automatically selected to determine the extent and possible cause of the fire. In yet another application, motion sensors and image sensors could be used in a security system for monitoring motion in portions of a building, for example. The motion sensors could provide information to a central processor for automatically selecting an appropriate view.

It will be appreciated that the foregoing description and drawings are only intended to be illustrative of the present invention. Variations, changes, substitutions and modifications of the present invention may occur to those skilled in the art without departing from the spirit and scope of the present invention. Accordingly, it is intended that the present invention be limited only by the scope of the appended claims.

## Claims

1. An automatic video tracking system, comprising:
a plurality of video input devices, each video input device providing a view of a defined area;
a plurality of audio pickup devices for picking up audio in the defined area; and
at least one video output device for outputting video from one or more of the video input devices;
a controller for receiving audio information from the plurality of audio pickup devices and for determining relative location of a talker within the defined area based on the received audio information, the controller selecting one of the plurality of video input devices having a view corresponding to the defined area including the talker for output by the at least one video output device.

2. A system according to Claim 1, wherein the plurality of video input devices comprise a plurality of discrete video devices.

3. A system according to Claim 1, wherein the plurality of video input devices comprise a plurality of discrete CCD video sensors and further comprising common processing circuitry for selectively processing the video from the plurality of discrete CCD video sensors.

4. A system according to Claim 1, wherein the plurality of audio pickup devices comprise beam-forming, signal seeking devices.

5. An automatic video tracking system, comprising:
a video output device;
a plurality of video input devices, each video input device providing a view of a defined area;
a plurality of sensors, each sensor providing output information in response to a predetermined stimuli;
a controller for receiving the output information from each of the plurality of sensors and based thereon, selecting one of the plurality of video input devices for output by the video output device.

6. A system according to Claim 5, wherein the plurality of sensors comprise motion sensors.

7. A system according to Claim 5, wherein the plurality of sensors comprise pressure sensors.

8. A system according to Claim 5, wherein the plurality of sensors comprise temperature sensors.

9. A system according to Claim 5, wherein the plurality of sensors comprise smoke sensors.

10. A system according to Claim 5, wherein the plurality of video input devices comprise a plurality of discrete video camera units.

11. A system according to Claim 5, wherein the controller simultaneously selects other of the plurality of video input devices for output by the video output device along with said selected one of the plurality of video input devices.

12. A method for automatic video tracking, comprising:
providing video information indicating a plurality of views of a defined area;
sensing a predetermined stimuli corresponding to each of the plurality of views of the defined area;
selecting video information indicating one of the plurality of views based on the predetermined stimuli sensed in said sensing step; and
outputting the video information indicating one of the plurality of views, selected in said selecting step.
